**Europäisches Patentamt**

**European Patent Office**

**Office européen des brevets**

(19)

(11) **EP 1 382 281 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.⁷: **A47J 31/60**, B67D 1/07

(21) Anmeldenummer: **02016131.1**

(22) Anmeldetag: **19.07.2002**

(54) **Einrichtung zur Erkennung von Reinigungsmittelzugabe bei einem Getränkeausgabegerät**

Apparatus and method for detecting the presence of cleaning agent in the cleaning water of a beverage vendor

Dispositif et méthode pour la détection de la présence de produit nettoyant dans l'eau de lavage d'un distributeur de boissons

(84) Benannte Vertragsstaaten:
**AT CH DE IT LI NL**

(43) Veröffentlichungstag der Anmeldung:
**21.01.2004 Patentblatt 2004/04**

(73) Patentinhaber: **WMF WÜRTTEMBERGISCHE METALLWARENFABRIK AG**
**73309 Geislingen/Steige (DE)**

(72) Erfinder: **Jäger, Peter**
**73312 Geislingen/Steige (DE)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
US-A- 3 338 153    US-A- 4 848 381
US-A- 4 956 887    US-A- 5 297 596
US-A- 5 370 743

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Getränkeausgabegerät, insbesondere eine Kaffeemaschine, mit einer Einrichtung zum Einleiten und Durchführen eines Reinigungsvorgangs mit einer wässrigen Reinigungsflüssigkeit.

Aus der US 4 848 381 ist bereits ein Gerät zur Herstellung von Softeis und Milkshakes bekannt mit einem Tank für Wasser und Reinigungsmittel, wobei im Reinigungstank über Messen der Leitfähigkeit bestimmt wird, ob die Reinigungsmittelkonzentration in Ordnung ist. Eine Steuereinheit erfasst periodisch die Leitfähigkeit zwischen zwei Elementen einer Sonde.

Aus der Druckschrift US 3 338 153 A ist bereits ein Getränkeausgabegerät mit einem Brüher und einer Reinigungseinrichtung bekannt.

Häufigste Ausfallursache bei gewerblich genutzten Getränkeausgabegeräten, wie z.B. gewerblich genutzten Kaffeemaschinen, ist mangelhafte Reinigung. Zwar kann durch entsprechende Gestaltung der Steuersoftware sichergestellt werden, dass regelmäßig eine Maschinenreinigung durchgeführt wird, nicht aber, dass dabei auch Reinigungsmittel eingesetzt werden. Bei der vollautomatischen Reinigung werden u.a. Flüssigreiniger verwendet. Das Reinigungsmittel wird zu festgelegten Zeiten über einen Timer oder durch manuelles Auslösen eines Reinigungsvorgangs mittels einer Pumpe dem Brüher zugeführt. Eine derartige Einrichtung ist aufwendig und teuer und es ist darüber hinaus schwierig, den Reinigerfluss zu überwachen.

Der vorliegenden Erfindung liegt daher die Aufgabe zugrunde, ein Getränkeausgabegerät bereitzustellen, das die Überprüfung einer korrekten Reinigungsmittelzugabe beim Reinigungsvorgang ermöglicht.

Erfindungsgemäß wird diese Aufgabe durch ein Verfahren und eine Messeinrichtung zum Feststellen, ob der wässrigen Reinigungsflüssigkeit ein Reinigungsmittel zugeführt wurde, gelöst.

Dadurch, dass in der wässrigen Reinigungsflüssigkeit eine Messeinrichtung vorgesehen ist, die feststellen kann, ob der wässrigen Reinigungsflüssigkeit ein Reinigungsmittel zugeführt wurde, kann ein korrekter Reinigungsvorgang sichergestellt werden. Bei Feststellen, dass die wässrige Reinigungsflüssigkeit kein Reinigungsmittel enthält, kann der Reinigungsvorgang gegebenenfalls abgebrochen werden. Somit kann verhindert werden, dass unbeabsichtigt und unbemerkt eine unzureichende Reinigung ohne Reinigungsmittel durchgeführt wird.

Gemäß der vorliegenden Erfindung ist die Messeinrichtung zum Feststellen der Leitfähigkeit bzw. des elektrischen Widerstands der Reinigungsflüssigkeit ausgebildet. Die Leitfähigkeit von Wasser nimmt bei Zugabe von Reinigungsmitteln aller Art durch das Hinzufügen von ionisierbaren, gelösten Stoffen deutlich zu. Dadurch ist es möglich, das Vorhandensein von Reinigungsmitteln im Wasser zu messen. Es ergibt sich für Wasser ohne Reinigungsmittel ein etwa 10-facher Widerstand im Vergleich zu Wasser mit Reinigungsmittel, so dass in Abhängigkeit der gemessenen Leitfähigkeit sicher unterschieden werden kann, ob der wässrigen Reinigungsflüssigkeit ein Reinigungsmittel beigesetzt wurde. Gemäß der Erfindung weist das Getränkeausgabegerät einen Brüher auf, wobei in vorteilhafter Art und Weise die Messeinrichtung stromabwärts des Brühers angeordnet ist. Die erfindungsgemäße Vorrichtung erlaubt die Anordnung der Messeinrichtung auch stromabwärts des Brühers, da selbst das Vorhandensein von z.B. Kaffeemehl die Leitfähigkeit der Reinigungsflüssigkeit nur geringfügig ändert, so dass trotz Anwesenheit von Kaffeemehl festgestellt werden kann, ob der Reinigungsflüssigkeit Reinigungsmittel zugesetzt ist oder nicht.

In bevorzugter Weise umfasst die Messeinrichtung zwei voneinander beabstandete Elektroden, die in der Reinigungsflüssigkeit angeordnet sind. Diese Ausführungsform ist kostengünstig und einfach zu realisieren.

Die Einrichtung zum Einleiten und Durchführen eines Reinigungsvorgangs umfasst eine Steuereinrichtung und eine manuelle oder automatische Zugabevorrichtung für Reinigungsmittel.

In vorteilhafter Weise wird die Messeinrichtung durch eine Konstantstromquelle gespeist, um dann die Spannung oder den Widerstand zwischen den Elektroden zu messen. Die Messeinrichtung kann in einer LCR-Messbrücke oder einem Spannungsteiler integriert sein. Die Elektroden können auch mit einer Wechselspannung oder einer gepulsten Gleichspannung zur Vermeidung von Oxidation und Verschmutzung beaufschlagt werden.

Gemäß einer bevorzugten Ausführungsform ist die Messeinrichtung mit der Steuereinrichtung verbunden und die Steuereinrichtung ist so ausgestaltet, dass sie ein Signal zum Stoppen des Reinigungsvorgangs abgibt, wenn festgestellt wird, dass kein Reinigungsmittel zugegeben wurde. So wird sichergestellt, dass kein Reinigungsvorgang ohne Reinigungsmittel durchgeführt wird. Darüber hinaus kann zusätzlich eine Anzeigeeinrichtung angeordnet sein, die dann erneut zur Zugabe von Reinigungsmitteln auffordert. Die Steuereinrichtung kann aber auch derart ausgelegt sein, dass bei Feststellen, dass kein Reinigungsmittel zugegeben wurde, der Reinigungsvorgang fortgesetzt wird, wobei die Steuereinrichtung einen Fehlerspeicher umfasst, um das Fehlen des Reinigungsmittels abzulegen.

Weiter wird gemäß dem erfindungsgemäßen Verfahren wird zu Beginn des Reinigungsvorgangs festgestellt, ob Reinigungsflüssigkeit dem Reinigungsmittel beigesetzt wurde. So kann der Reinigungsvorgang rechtzeitig abgebrochen werden. In vorteilhafter Weise wird das Ausgangssignal der Messung analog, z.B. als analoges Spannungssignal erfasst.

Die vorliegende Erfindung wird nachfolgend unter Bezugnahme der beiliegenden Figuren näher erläutert.

Figur 1    zeigt eine schematische, vereinfachte Darstellung eines erfindungsgemäßen Getränkeausgabegeräts.

Figur 2    zeigt eine erfindungsgemäße Einrichtung zum Feststellen, ob einer wässrigen Reinigungsflüssigkeit ein Reinigungsmittel zugesetzt wurde.

Figur 3    zeigt Messergebnisse verschiedener Medien, die mit der erfindungsgemäßen Einrichtung gemessen wurden.

Figur 4    zeigt ein Ersatzschaltbild für die Spannungsmessung.

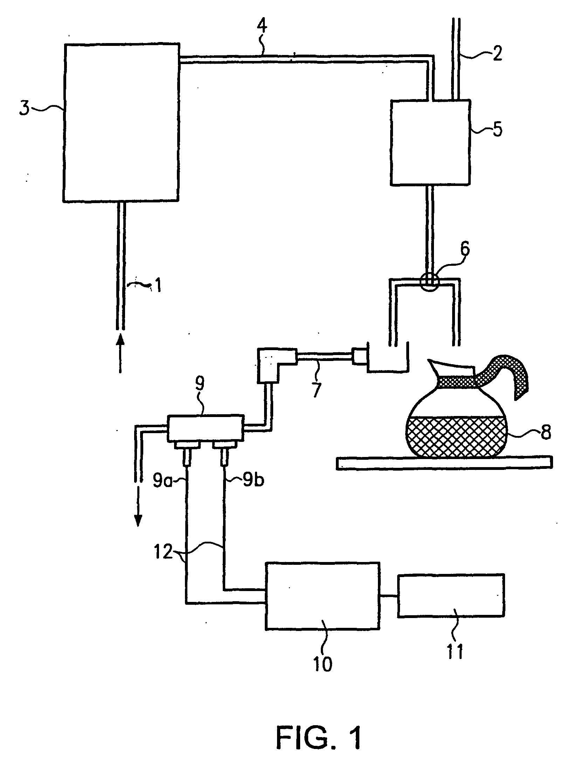

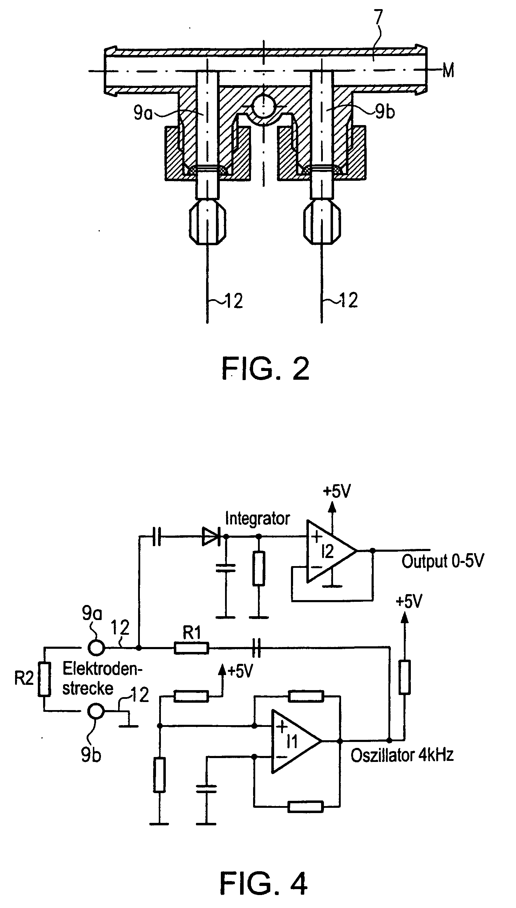

Figur 1 zeigt stark vereinfacht den schematischen Aufbau einer Kaffeemaschine gemäß einem bevorzugten Ausführungsbeispiel der vorliegenden Erfindung. Wie in Figur 1 zu erkennen ist, weist die erfindungsgemäße Kaffeemaschine eine Wasserleitung 1 auf, durch die Wasser in einen Heißwasserbereiter 3 geleitet wird, worin es dann erhitzt wird. Das heiße Wasser kann über eine Brühleitung 4 in einen Brüher 5 laufen, dem durch eine nicht dargestellte Dosiereinrichtung Kaffeemehl zugesetzt wurde. Der aufgebrühte Kaffee kann dann über ein 3/2 Wege-Ventil 6 entweder in eine Kaffeekanne 8 laufen oder aber über eine Ablaufleitung 7 ablaufen. Derartige Kaffeemaschinen müssen regelmäßig mit einem Reinigungsmittel gereinigt werden. Die Reinigung erfolgt entweder automatisch oder manuell. Dabei wird dem Brüher über eine Reinigungsmittelzugabe 2 Reinigungsmittel zugegeben. Der Reinigungsvorgang wird durch eine Steuereinrichtung 10 eingeleitet und durchgeführt. In diesem Ausführungsbeispiel befindet sich in der Ablaufleitung 7 eine Messeinrichtung 9 zum Messen der Leitfähigkeit bzw. des elektrischen Widerstand der Reinigungsflüssigkeit, die durch die Ablaufleitung 7 abläuft. Wie aus Figur 2 ersichtlich ist, umfasst die Messeinrichtung 9 zwei voneinander beabstandete Elektroden 9a, 9b, die in die wässrige Reinigungsflüssigkeit eintauchen. In diesem Ausführungsbeispiel reichen die beiden Elektroden 9a, 9b bis zur Mittellinie M des Rohrabschnitts der Ablaufleitung 7. Die Elektroden können beispielsweise aus Titan oder V2A-Stahl sein. Der Elektrodenabstand liegt vorzugsweise in einem Bereich zwischen 5 und 30 mm, bei diesem Ausführungsbeispiel z.B. bei 16 mm. Die Elektrodenoberfläche liegt in einem Bereich von 10 bis 50 mm$^2$, in diesem Ausführungsbeispiel z.B. 35 mm$^2$. Die Medientemperatur liegt bei 90 bis 100°.

Über die Leitungen 12 wird z.B. über eine nicht dargestellte Konstantstromquelle oder Wechselstromquelle (z.B. 100 Hz oder im KHz-Bereich) ein Storm an die Elektroden 9a und 9b angelegt. Die Steuerung 10 ist mit der Messeinrichtung 9 verbunden und interpretiert den von der Messeinrichtung 9 erfassten Messwert dahingehend, ob Reinigungsmittel enthalten ist oder nicht. Die Steuerung 10 ist weiter mit einer Anzeigevorrichtung 11 verbunden, die ein optisches und/oder ein akustisches Signal ausgeben kann.

Bei Beginn des Reinigungsvorgangs, d.h. nachdem von der Steuereinrichtung 10 der Reinigungsvorgang eingeleitet wurde, wird eine Messung durch die Messeinrichtung 9 vorgenommen. Die Leitfähigkeit von Wasser nimmt bei Zugabe von Reinigungsmitteln aller Art durch das Hinzufügen von ionisierbaren gelösten Stoffen deutlich zu. Dadurch ist es möglich, das Vorhandensein von Reinigungsmitteln in der wässrigen Reinigungsflüssigkeit mit Hilfe der beiden Elektroden 9a, 9b zu messen. Das heißt, dass sich auch der Ohmsche Widerstand R der Messanordnung entsprechend der Zugabe von Reinigungsmitteln ändert, da R = $\rho \times l / A$ (wobei $\rho$ der spezifische Widerstand der Lösung ist, l der Elektrodenabstand und A die wirksame Elektrodenoberfläche). Der Quotient l/A ist die Widerstandskapazität für die Messanordnung und ist konstant. Somit kann über die Messung des Ohmschen Widerstands bzw. durch die Messung der Spannung zwischen den Elektroden 9a und 9b eine Aussage über die Leitfähigkeit der Reinigungsflüssigkeit gemacht werden.

Das Ausgangssignal der Messeinrichtung wird von der Steuerung 10 analog erfasst. Das analoge Ausgangssignal kann auch über einen Schwellwertschalter in ein digitales Signal umgewandelt werden. Die Erfassung des Ausgangssignals der Messeinrichtung erfolgt über die übliche Beschaltung zur Widerstandsmessung, wobei die Messeinrichtung entweder in eine LCR-Messbrücke oder einen Spannungsteil integriert sein kann.

Figur 4 zeigt ein Beispiel für ein Ersatzschaltbild für die Spannungsmessung. Wie bereits erwähnt, werden die Elektroden 9a und 9b über Leitungen 12 durch den Oszillator (I 1) mit Wechselspannung versorgt. Um Ablagerungen an den Elektroden zu verhindern, wird in diesem Ausführungsbeispiel eine Wechselspannung im KHz-Bereich, hier 4 KHz, an die Elektroden angelegt. Es ist auch denkbar, eine gepulste Gleichspannung an die Elektroden anzulegen. Eine Wechselspannung beugt auch einer Oxidation der Elektroden vor. In der Figur 4 entspricht der Widerstand R2 dem zu ermittelnden ohmschen Widerstand in der Messlösung. Die Widerstände R1 und R2 bilden einen Spannungsteiler. Das Signal vom Spannungsteiler, dessen Höhe wiederum von der Leitfähigkeit der Messlösung abhängt, wird dann auf einen Spannungsfolger geschaltet. Hier wird das spannungsgeteilte Signal im Integrator (I 2) aufintegriert. Das analoge Ausgangssignal kann dann über einen Schwellwertschalter in ein digitales Signal umgewandelt werden oder direkt über den Analogeingang der Steuerung 10 ausgewertet werden. Gemäß der vorliegenden Erfindung weist beispielsweise die Messeinrichtung Elektroden 9a, 9b auf mit einem Elektrodenabstand von 16 mm, sowie einer jeweiligen Elektrodenfläche von 35 mm$^2$. Bei gemessener Leitfähigkeit verschiedener Trinkwässer im Bereich von 500 bis 1000 µS ergibt sich

$$R = L / (A * \chi) = 16mm / (35mm^2 * 500 \ \mu S) = 914 \ \Omega$$

$$16mm / (35mm^2 * 1000 \mu S) = 457 \ \Omega$$

Bei der gewählten Dimensionierung der Elektroden empfiehlt sich ein Widerstand von R1 = 180 Ohm. Bei einem Spannungsteiler von 180 Ohm zu 914 Ohm bzw. 457 Ohm ergibt sich daraus bei einer angelegten Spannung von 5 Volt eine Ausgangsspannung bzw. Messspannung von 4,2 Volt bis 3,6 Volt bei Trinkwasser.

Die Steuerung 10 interpretiert den Messwert dahingehend, ob Reinigungsmittel enthalten ist oder nicht. Das heißt, dass der Messwert z.B. mit Referenzwerten, die in der Steuereinrichtung 10 gespeichert sind, verglichen wird, wonach entschieden wird, ob der Messwert einer Leitfähigkeit mit oder ohne Reinigungsmittel entspricht. Entspricht der Messwert einer Leitfähigkeit mit Reinigungsmittel, so wird die Reinigung fortgesetzt. Entspricht der Messwert einem Leitwert für eine Reinigungsflüssigkeit ohne Reinigungsmittel, d.h. dass ein Reinigungsvorgang eingeleitet wurde, ohne dass über die Reinigungsmittelzugabe 2 ein Reinigungsmittel dem Leitungswasser zugeführt wurde, so wird der Reinigungsvorgang von der Steuereinrichtung 10 abgebrochen, indem die Steuereinrichtung ein Signal zum Stoppen des Reinigungsvorgangs abgibt. Gleichzeitig kann die Steuereinrichtung ein Signal an die Anzeigeneinrichtung 11 weitergeben, die erneut zur Zugabe von Reinigungsmitteln auffordert. Die Anzeigeeinrichtung 11 kann ein optisches und/oder ein akustisches Signal abgeben. Es besteht jedoch auch die Möglichkeit, dass die Steuereinrichtung 10 derart ausgelegt ist, dass selbst, wenn festgestellt wird, dass der Reinigungsflüssigkeit kein Reinigungsmittel zugesetzt wurde, die Reinigung dennoch fortgesetzt wird. Das Fehlen des Reinigungsmittels wird jedoch in einem nicht dargestellten Fehlerspeicher abgelegt und gegebenenfalls erscheint eine Fehlermeldung.

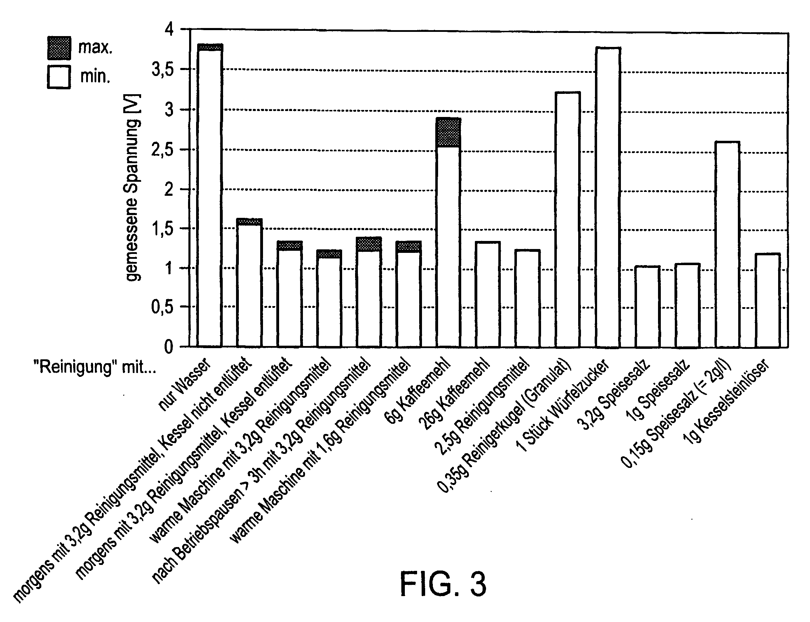

Figur 3 zeigt die mit der in Figur 1 gezeigten Anordnung gemessenen Spannungen zwischen den Elektroden 9a und 9b von verschiedenen Medien. Wie aus der Figur 3 hervorgeht, gibt es einen deutlichen Spannungsabfall der gemessenen Spannungen, wenn Reinigungsmittel der Reinigungsflüssigkeit zugefügt wird. Die eventuelle Anwesenheit von Kaffeemehl in dem Brüher 5 verfälscht das Messergebnis nicht, da die entsprechende gemessene Spannung deutlich über den gemessenen Spannungen mit Reinigungsmitteln liegt. Nur eine sehr hohe Kaffeemenge von 26 g Kaffeemehl setzt die gemessene Spannung so weit herab, dass sie einem Bereich, der dem Leitfähigkeitsbereich der Reinigungsflüssigkeit mit Reinigungsmittel entspricht, herab. Dies stört jedoch die Messung nicht, da 26 g Kaffeemehl weit über der gewöhnlichen Kaffeemehlmenge liegen. Eine solche große Menge kommt in der Praxis nicht vor und sollte dies dennoch der Fall sein, würde die Steuereinrichtung einen Brühmotorfehler melden, so dass der Reinigungsvorgang erst gar nicht gestartet werden könnte.

Zusammenfassend sollte festgestellt werden, dass das erfindungsgemäße Getränkeausgabegerät sowie das erfindungsgemäße Verfahren eine zuverlässige Reinigung ermöglichen.

**Patentansprüche**

1. Getränkeausgabegerät mit einer Einrichtung (10, 2) zum Einleiten und Durchführen eines Reinigungsvorgangs mit einer wässrigen Reinigungsflüssigkeit, wobei
   eine Messeinrichtung (9) zum Feststellen, ob der wässrigen Reinigungsflüssigkeit während des Reinigungsvorgangs ein Reinigungsmittel zugeführt wurde, vorgesehen ist,
   die Messeinrichtung (9) zum Feststellen der Leitfähigkeit bzw. des elektrischen Widerstands der Reinigungsflüssigkeit ausgebildet ist, **dadurch gekennzeichnet, dass** die Messeinrichtung (9) stromabwärts eines Brühers (5) angeordnet ist.

2. Getränkeausgabegerät nach Anspruch 1, **dadurch gekennzeichnet, dass** die Messeinrichtung (9) zwei voneinander beabstandete Elektroden (9a, 9b), die in der Reinigungsflüssigkeit angeordnet sind, umfasst.

3. Getränkeausgabegerät nach einem der Ansprüche 1 bis 2, **dadurch gekennzeichnet, dass** die Einrichtung (10, 2) zum Durchführen und Einleiten eines Reinigungsvorgangs eine Steuereinrichtung (10) umfasst.

4. Getränkeausgabegerät nach mindestens einem der Ansprüche 1 bis 3, **dadurch gekennzeichnet, dass** die Einrichtung zum Einleiten und Durchführen eines Reinigungsvorgangs eine manuelle oder automatische Zugabevorrichtung für Reinigungsmittel umfasst.

5. Getränkeausgabegerät nach mindestens einem der Ansprüche 1 bis 4, **dadurch gekennzeichnet, dass** die Messeinrichtung (9) durch eine Konstantstromquelle gespeist wird.

6. Getränkeausgabegerät nach mindestens einem der Ansprüche 1 bis 5, **dadurch gekennzeichnet, dass** die Messeinrichtung (9) in eine LCR-Messbrücke oder einen Spannungsteiler integriert ist.

**7.** Getränkeausgabegerät nach Anspruch 2, **dadurch gekennzeichnet, dass** eine Wechselspannungsquelle die Elektroden (9a, 9b) mit einer Wechselspannung beaufschlagt.

**8.** Getränkeausgabegerät nach Anspruch 2, **dadurch gekennzeichnet, dass** die Elektroden (9a, 9b) mit einer gepulsten Gleichspannung beaufschlagt werden.

**9.** Getränkeausgabegerät nach Anspruch 3, **dadurch gekennzeichnet, dass** die Messeinrichtung (9) mit der Steuereinrichtung (10) verbunden ist und die Steuereinrichtung (10) so ausgelegt ist, dass sie, wenn festgestellt wird, dass kein Reinigungsmittel zugegeben wurde, ein Signal zum Stoppen des Reinigungsvorgangs abgibt.

**10.** Getränkeausgabegerät nach Anspruch 9, **dadurch gekennzeichnet, dass** die Steuereinrichtung (10) weiter mit einer Anzeigevorrichtung (11) verbunden ist, die erneut zur Zugabe von Reinigungsmitteln auffordert.

**11.** Getränkeausgabegerät nach Anspruch3, **dadurch gekennzeichnet, dass** die Steuereinrichtung (10) einen Fehlerspeicher umfasst, um das Fehlen des Reinigungsmittels abzulegen.

**12.** Verfahren zum Reinigen eines Getränkeausgabegeräts mit einer wässrigen Reinigungsflüssigkeit, wobei über eine Messeinrichtung festgestellt wird, ob der wässrigen Reinigungsflüssigkeit ein Reinigungsmittel beigesetzt wurde, wobei in Abhängigkeit der gemessenen Leitfähigkeit bzw. des elektrischen Widerstands der wässrigen Reinigungsflüssigkeit festgestellt wird, ob der wässrigen Reinigungsflüssigkeit ein Reinigungsmittel beigesetzt wurde, **dadurch gekennzeichnet, dass** die Messeinrichtung stromabwärts eines Brühers angeordnet ist.

**13.** Verfahren nach Anspruch 12, **dadurch gekennzeichnet, dass** die Messung über zwei Elektroden, an die eine Gleichspannung oder eine gepulste Gleichspannung oder eine Wechselspannung angelegt wird, erfolgt.

**14.** Verfahren nach einem der Ansprüche 12 bis 13, **dadurch gekennzeichnet, dass** das Ausgangssignal der Messung analog erfasst wird.

**15.** Verfahren nach einem der Ansprüche 12 bis 14, **dadurch gekennzeichnet, dass** zu Beginn des Reinigungsvorgangs festgestellt wird, ob der Reinigungsflüssigkeit Reinigungsmittel beigesetzt wurde.

**16.** Verfahren nach einem der Ansprüche 12 bis 15, **dadurch gekennzeichnet, dass** nach dem Feststellen, dass kein Reinigungsmittel zugegeben wurde, der Reinigungsvorgang abgebrochen wird und erneute Zugabe von Reinigungsmittel gefordert wird.

**17.** Verfahren nach mindestens einem der Ansprüche 12 bis 16, **dadurch gekennzeichnet, dass** nach dem Feststellen, dass kein Reinigungsmittel zugegeben wurde, der Reinigungsvorgang weitergeführt wird, jedoch das Fehlen des Reinigungsmittels in einem Fehlerspeicher abgelegt wird.

## Claims

**1.** A beverage dispenser comprising a means (10, 2) for initiating and executing a cleaning process with an aqueous cleaning liquid, wherein a measurement device (9) is provided for determining whether a cleaning agent has been added to the aqueous cleaning liquid during the cleaning process, said measurement device (9) is configured for determining the conductivity or rather the electrical resistance of the cleaning liquid, **characterized in that** said measurement device (9) is arranged downstream of a brewing unit (5).

**2.** A beverage dispenser according to claim 1, **characterized in that** the measurement device (9) comprises two spaced-apart electrodes (9a, 9b) which are arranged in the cleaning liquid.

**3.** A beverage dispenser according to one of the claims 1 to 2, **characterized in that** the means (10, 2) for executing and initiating a cleaning process comprises a control unit (10).

**4.** A beverage dispenser according to at least one of the claims 1 to 3, **characterized in that** the means for initiating and executing a cleaning process comprises a manual or automatic feeder for the cleaning agent.

**5.** A beverage dispenser according to at least one of the claims 1 to 4, **characterized in that** the measurement device (9) is fed by a constant current source.

**6.** A beverage dispenser according to at least one of the claims 1 to 5, **characterized in that** the measurement device (9) is integrated in an LCR measuring bridge or in a voltage divider.

**7.** A beverage dispenser according to claim 2, **characterized in that** an a.c. voltage source applies an alternating voltage to the electrodes (9a, 9b).

8. A beverage dispenser according to claim 2, **characterized in that** the electrodes (9a, 9b) have applied thereto a pulsed direct voltage.

9. A beverage dispenser according to claim 3, **characterized in that** the measurement device (9) is connected to the control unit (10) and that the control unit (10) is configured in such a way that, if it is determined that no cleaning agent has been added, it will output a cleaning-process stop signal.

10. A beverage dispenser according to claim 9, **characterized in that** the control unit (10) is additionally connected to an indicator unit (11) which demands an addition of cleaning agents once more.

11. A beverage dispenser according to claim 3, **characterized in that** the control unit (10) comprises an error memory for storing the absence of the cleaning agent.

12. A method of cleaning a beverage dispenser with an aqueous cleaning liquid, comprising the step of determining by means of a measurement device whether a cleaning agent has been added to the aqueous cleaning liquid, said step of determining whether a cleaning agent has been added to the aqueous cleaning liquid being carried out in dependence upon the measured conductivity or rather the electrical resistance of the aqueous cleaning liquid, **characterized in that** the measurement device is arranged downstream of a brewing unit.

13. A method according to claim 12, **characterized in that** the measurement is executed via two electrodes which have a direct voltage or a pulsed direct voltage or an a.c. voltage applied thereto.

14. A method according to one of the claims 12 to 13, **characterized in that** the output signal of the measurement is detected in analog form.

15. A method according to one of the claims 12 to 14, **characterized in that** the step of determining whether a cleaning agent has been added to the cleaning liquid is carried out at the beginning of the cleaning process.

16. A method according to one of the claims 12 to 15, **characterized in that**, when it has been determined that no cleaning agent has been added, the cleaning process is discontinued and an addition of cleaning agent is demanded once more.

17. A method according to one of the claims 12 to 16, **characterized in that**, when it has been determined that no cleaning agent has been added, the cleaning process is continued, the absence of the cleaning agent being, however, stored in an error memory.

## Revendications

1. Distributeur de boissons comportant un dispositif (10, 2) pour l'initiation et l'exécution d'un processus de nettoyage avec un liquide de nettoyage aqueux, un dispositif de mesure (9) étant prévu afin de détecter si un produit nettoyant a été ajouté au liquide de nettoyage aqueux pendant le processus de nettoyage, le dispositif de mesure (9) étant agencé pour détecter la conductibilité ou la résistivité électrique du liquide de nettoyage, **caractérisé en ce que** le dispositif de mesure (9) est placé en aval d'une bouilloire(5).

2. Distributeur de boissons selon la revendication 1, **caractérisé en ce que** le dispositif de mesure (9) comporte deux électrodes (9a, 9b) espacées l'une de l'autre, qui sont disposées dans le liquide de nettoyage.

3. Distributeur de boissons selon l'une des revendications 1 ou 2, **caractérisé en ce que** le dispositif (10, 2) pour l'exécution et l'initiation d'un processus de nettoyage comporte un dispositif de commande (10).

4. Distributeur de boissons selon l'une au moins des revendications 1 à 3, **caractérisé en ce que** le dispositif pour l'initiation et l'exécution d'un processus de nettoyage comporte un dispositif d'ajout manuel ou automatique de produit nettoyant.

5. Distributeur de boissons selon l'une au moins des revendications 1 à 4, **caractérisé en ce que** le dispositif de mesure (9) est alimenté par une source à courant constant.

6. Distributeur de boissons selon l'une au moins des revendications 1 à 5, **caractérisé en ce que** le dispositif de mesure (9) est intégré dans un pont de mesure LCR ou dans un diviseur de tension.

7. Distributeur de boissons selon la revendication 2, **caractérisé en ce qu'**une source de tension alternative alimente les électrodes (9a, 9b) avec une tension alternative.

8. Distributeur de boissons selon la revendication 2, **caractérisé en ce que** les électrodes (9a, 9b) sont alimentées avec une tension continue pulsée.

9. Distributeur de boissons selon la revendication 3, **caractérisé en ce que** le dispositif de mesure (9) est relié au dispositif de commande (10), et **en ce que** le dispositif de commande (10) est conçu de telle sorte que, lorsqu'il est détecté qu'aucun produit nettoyant n'a été ajouté, il délivre un signal pour stopper le processus de nettoyage.

**10.** Distributeur de boissons selon la revendication 9, **caractérisé en ce que** le dispositif de commande (10) est en outre relié à un dispositif d'affichage (11), qui demande à nouveau l'ajout de produits nettoyants.

**11.** Distributeur de boissons selon la revendication 3, **caractérisé en ce que** le dispositif de commande (10) comporte une mémoire de défauts afin d'enregistrer le manque du produit nettoyant.

**12.** Procédé destiné au nettoyage d'un distributeur de boissons avec un liquide de nettoyage aqueux,

dans lequel il est détecté par l'intermédiaire d'un dispositif de mesure si un produit nettoyant a été ajouté au liquide de nettoyage aqueux, l'ajout d'un produit nettoyant au liquide de nettoyage aqueux étant détecté en fonction de la conductibilité ou de la résistivité électrique mesurée du liquide de nettoyage aqueux,

**caractérisé en ce que** le dispositif de mesure est placé en aval d'une bouilloire.

**13.** Procédé selon la revendication 12, **caractérisé en ce que** la mesure est effectuée par l'intermédiaire de deux électrodes auxquelles est appliquée une tension continue ou une tension continue pulsée ou une tension alternative.

**14.** Procédé selon l'une des revendications 12 ou 13, **caractérisé en ce que** le signal de sortie de la mesure est saisi par voie analogique.

**15.** Procédé selon l'une quelconque des revendications 12 à 14, **caractérisé en ce qu'**il est détecté au début du processus de nettoyage si un produit nettoyant a été ajouté au liquide de nettoyage.

**16.** Procédé selon l'une quelconque des revendications 12 à 15, **caractérisé en ce que**, après la détection qu'il n'a pas été ajouté de produit nettoyant, le processus de nettoyage est interrompu, et un nouvel ajout de produit nettoyant est demandé.

**17.** Procédé selon l'une quelconque des revendications 12 à 16, **caractérisé en ce que**, après la détection qu'il n'a pas été ajouté de produit nettoyant, le processus de nettoyage est poursuivi, le manque de produit nettoyant étant cependant enregistré dans une mémoire de défauts.

FIG. 1

FIG. 2

FIG. 4

FIG. 3